# EUROPEAN PATENT APPLICATION

(11) **EP 4 371 737 A1**
(43) Date of publication of application: **22.05.2024**
(21) Application number: 21949661.9
(22) Date of filing: 15.07.2021
(51) Int. Cl.: B29C 64/30, B29C 64/129, B33Y 30/00

(54) **APPARATUS FOR MAINTAINING CONSTANT 3D PRINTING LIQUID LEVEL HEIGHT, AND METHOD**

(71) Applicant: Bmf Nano Material Technology Co., Ltd., Shenzhen, Guangdong 518000 (CN)
(72) Inventor: PENG, Chong, Shenzhen, Guangdong 518000 (CN)
(74) Representative: Ipside
(86) International application number: PCT/CN2021/106459
(87) International publication number: WO 2023/283874

(57) **Abstract**

This disclosure relates to a device for maintaining a constant liquid level in 3D printing, comprising: a liquid tank for storing printing liquid; a printing platform for supporting printed samples, the printing platform extending into the liquid tank and capable of ascending and descending under the driving of a printing lifting device; a liquid level balancing block extending into the liquid tank; a linkage mechanism connecting the printing platform and the liquid level balancing block, capable of raising the liquid level balancing block when the printing platform descends; and the volume of the printing platform corresponds to the volume of the liquid level balancing block, satisfying the condition that the volume of the printing liquid immersed by the printing platform descending is equal to the volume of the liquid level balancing block leaving the printing liquid. The advantageous effect of the present invention is to use the volume of the balancing block to balance the liquid volume, ensuring that the liquid level remains constant at a fixed height during the 3D printing process, regardless of the vertical movement of the printing platform.

## Description

### Technical Field

The present invention relates to the field of 3D printing technology, particularly relating to precision control applied in high-precision light-curing 3D printing processes.

### Background Art

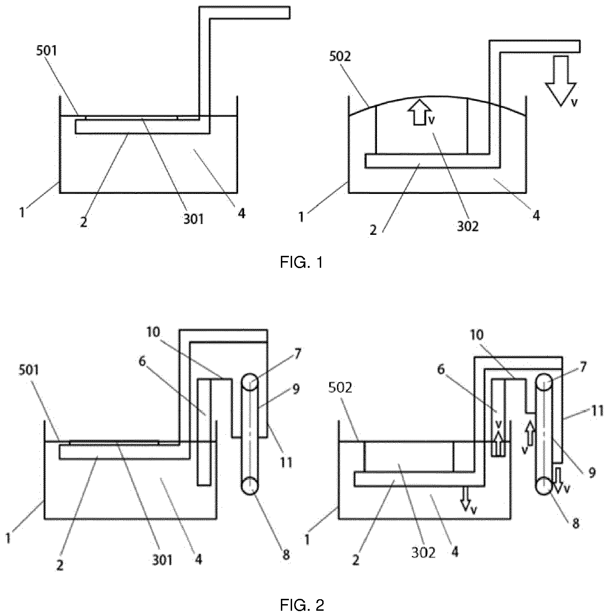

Currently, high-precision light-curing 3D printing often adopts a configuration where the light machine is positioned above and the liquid tank is positioned below. The purpose is to use a thinner release film or even a self-leveling method to accurately project patterns onto photosensitive resin surfaces for higher precision. With the configuration of the light machine positioned above, the printing platform gradually lowers and immerses more into the liquid tank as the printing progresses. As shown in Figure 1 on the left, at the beginning of printing, the sample 301 has a small volume, resulting in a small volume of printing liquid 4 being displaced, and the height of the release film or liquid level 501 at the beginning of printing is relatively low. As the printing continues, as shown in Figure 1 on the right, the height of the sample 302 after a certain period of printing increases continuously. The support rods of the printing platform 2 keep immersing into the liquid tank 1, displacing the printing liquid 4 in the tank and causing the height of the release film or liquid level 502 after printing to rise. This leads to two issues: 1) the release film or liquid level 501 at the beginning of printing, which was originally at the focal plane, deviates from the focal plane, further causing blurred projected patterns and significantly reducing the accuracy within the printing XY plane; 2) the continuously rising liquid level increases the error in the Z direction of the printed object's height.

### Summary of the Invention

The technical problem to be solved by the present invention is to provide a device and method for maintaining a constant height of the 3D printing liquid level, in order to address the above-mentioned errors caused by the variation in the 3D printing liquid level in the prior art.

The technical solution adopted to solve the technical problem of the present invention is as follows.

According to one aspect of the present invention, a device for maintaining a constant height of the 3D printing liquid level, comprises:
- a liquid tank for storing the printing liquid;
- a printing platform for supporting the printed sample, wherein the printing platform extends into the liquid tank and can be raised and lowered by a printing lifting device;
- a liquid level balancing block inserted into the liquid tank;
- a linkage mechanism that connects the printing platform and the liquid level balancing block, capable of raising the liquid level balancing block when the printing platform descends; and the volume of the printing platform corresponds to the volume of the liquid level balancing block, satisfying that the volume of the printing liquid immersed due to the descent of the printing platform is equal to the volume of the liquid level balancing block leaving the printing liquid.

Preferably, the linkage mechanism comprises:
- a timing belt;
- a timing belt mounting component;
- a balancing block connector;
- a printing platform connector.

The timing belt is installed on the timing belt mounting component. When one side of the timing belt moves in a first direction, the other side moves in the opposite second direction along the first direction. One side of the timing belt is connected to the liquid level balancing block through the balancing block connector, while the other side is connected to the printing platform through the printing platform connector.

Preferably, the timing belt mounting component includes an upper fixed pulley and a lower fixed pulley. Both the balancing block connector and the printing platform connector are connecting rods.

Preferably, the printing platform includes a base plate and a lifting segment vertically fixed on one side of the base plate;

Both the lifting segment and the liquid level balancing block are cylindrical.

Preferably, the cross-sectional area of the lifting segment is S₁, and the cross-sectional area of the liquid level balancing block is S₂. The moving speed of one side of the timing belt is v₁, and the moving speed of the other side is v₂.

The relationship is given by S₁*v₁ = -S₂*v₂.

Preferably, the device further includes a balancing block lifting guide with a slider connected to the balancing block connector. The connection between the slider and the balancing block connector is equipped with a balancer relaxation knob to release the connection between the balancing block connector and the timing belt.

Preferably, the balancing block connector is connected to the liquid level balancing block through a balancer assembly/disassembly knob.

Preferably, the device further includes a printing platform Z-axis support plate and a printing platform Z-axis. The printing platform is connected to the printing platform Z-axis through the printing platform Z-axis, and the printing platform Z-axis support plate. The printing platform Rx leveling mechanism and the printing platform Ry leveling mechanism are fixed on the slider of the printing platform Z-axis. The printing platform Z-axis is used to precisely control the position of the printing platform.

According to another aspect of the invention, a method for maintaining a constant height of the 3D printing liquid level includes the following steps:
- providing a liquid level balancing block inserted into the liquid tank;
- providing a linkage mechanism that connects the printing platform and the liquid level balancing block, capable of raising the liquid level balancing block when the printing platform descends. The volume of the printing platform and the volume of the liquid level balancing block are in a corresponding relationship, satisfying that the volume of the printing liquid immersed by the descending printing platform is equal to the volume of the liquid level balancing block leaving the printing liquid.

The advantageous effects of the present invention are as follows.

By using the volume of the balancing block to balance the liquid volume, it ensures that the height of the liquid level remains constant at a fixed height throughout the 3D printing process, achieving:
a. No defocusing during high-precision 3D printing, especially for high precision within a focal depth of 10µm, ensuring accuracy within the XY plane of the printed object;
b. The stability of the liquid level during the printing process ensures the accuracy in the Z-direction height of the printed object.

### Brief Description of the Drawings

The technical solutions of the present invention are further described below in connection with the accompanying drawings and embodiments.
Figure 1 illustrates a schematic diagram of the position of the printing platform and the change in the liquid level before and after printing in the prior art.
Figure 2 illustrates a schematic diagram of the structure of the device for maintaining a constant height of the 3D printing liquid level in an embodiment of the present disclosure.
Figure 3 illustrates a cross-sectional structure diagram of the lifting segment and the liquid level balancing block in an embodiment of the present disclosure.
Figure 4 illustrates a three-dimensional structural schematic diagram of the device for maintaining a constant height of the 3D printing liquid level in an embodiment of the present disclosure.

### List of reference numerals:

1 - Liquid tank
2 - Printing platform
4 - Printing liquid
6 - Liquid level balancing block
7 - Upper fixed pulley
8 - Lower fixed pulley
9 - Timing belt
10 - Balancing block connector
11 - Printing platform connector
16 - Balancer relaxation knob
17 - Balancing block lifting guide
18 - Pulley support rod
20 - Balancer assembly/disassembly knob
21 - Base plate
22 - Lifting segment
23 - Printing platform Ry leveling mechanism
24 - Z-axis support plate
25 - Printing platform Rx leveling mechanism
26 - Printing platform Z-axis
27 - Printing platform assembly/disassembly knob
301 - Sample at the beginning of printing
302 - Sample after printing for a certain period
501 - Release film or liquid level at the beginning of printing
502 - Release film or liquid level after printing to a certain height

### Detailed Description of Embodiments

It should be noted that, unless otherwise specified, the embodiments and features described in this disclosure can be combined with each other without conflict. In the description of this disclosure, it should be understood that terms such as "center," "longitudinal," "lateral," "top," "bottom," "front," "rear," "left," "right," "vertical," "horizontal," "upper," "lower," "inner," "outer," and the like indicating orientation or positional relationships are based on the orientation or positional relationships shown in the drawings for the purpose of facilitating the description and simplifying the description. They do not indicate or imply that the device or element referred to must have a specific orientation, be constructed and operated in a specific orientation, and therefore should not be understood as limiting the scope of the present disclosure. Furthermore, terms such as "first," "second," etc., are used for descriptive purposes and should not be construed as indicating or implying relative importance or implying a specific quantity of the indicated technical features. Thus, features described with "first," "second," etc., can include one or more of those features, either explicitly or implicitly. In the description of the present invention, unless otherwise specified, the term "multiple" means two or more. It should be noted that, unless otherwise explicitly specified and limited, terms such as "installation," "connection," and "attachment" should be broadly interpreted. For example, they can refer to fixed connections, detachable connections, or integral connections. They can involve mechanical connections or electrical connections. They can be directly connected or indirectly connected through intermediate media. They can refer to internal connections between two components. Those skilled in the art can understand the specific meanings of the above terms in the context of the present disclosure. The following is a detailed description of the disclosed technical solution, with reference to the accompanying drawings and embodiments.

### Embodiments

This embodiment provides a device for maintaining a constant height of the 3D printing liquid level. As shown in Figure 2, the device includes:
- a liquid tank 1 for storing the printing liquid;
- a printing platform 2 for supporting the printed samples. The printing platform 2 extends into the liquid tank 1 and can be raised and lowered by a printing lifting device;
- a liquid level balancing block 6 extending into the liquid tank 1;
- a linkage mechanism connecting the printing platform 2 and the liquid level balancing block 6. The linkage mechanism can raise the liquid level balancing block 6 when the printing platform 2 descends. The volume of the printing platform 2 and the volume of the liquid level balancing block 6 correspond to each other, satisfying the condition that the volume of the printing platform 2 immersed in the printing liquid when it descends is equal to the volume of the liquid level balancing block 6 leaving the printing liquid when it rises.

In this embodiment, the device for maintaining a constant height of the 3D printing liquid level, as shown in Figure 2, ensures that regardless of the vertical movement of the printing platform, the liquid level remains at a fixed height throughout the3D printing process. This is achieved by ensuring that the volume of the printing platform immersed in the printing liquid when it descends is equal to the volume of the liquid level balancing block leaving the printing liquid when it rises.

Preferably, the device for maintaining a constant liquid level in 3D printing in this embodiment, as shown in Figure 2, includes:
- a timing belt 9;
- a timing belt mounting component;
- a balancing block connector 10;
- a printing platform connector 11.

The timing belt 9 is mounted on the timing belt mounting component. When one side of the timing belt 9 moves in the first direction, the other side moves in the opposite second direction along the first direction. One side of the timing belt 9 is connected to the liquid level balancing block 6 through the balancing block connector 10, while the other side is connected to the printing platform 2 through the printing platform connector 11.

Preferably, the device for maintaining a constant liquid level in 3D printing in this embodiment, as shown in Figure 2, includes an upper fixed pulley 7 and a lower fixed pulley 8 in the timing belt mounting component. Both the balancing block connector 10 and the printing platform connector 11 are connecting rods.

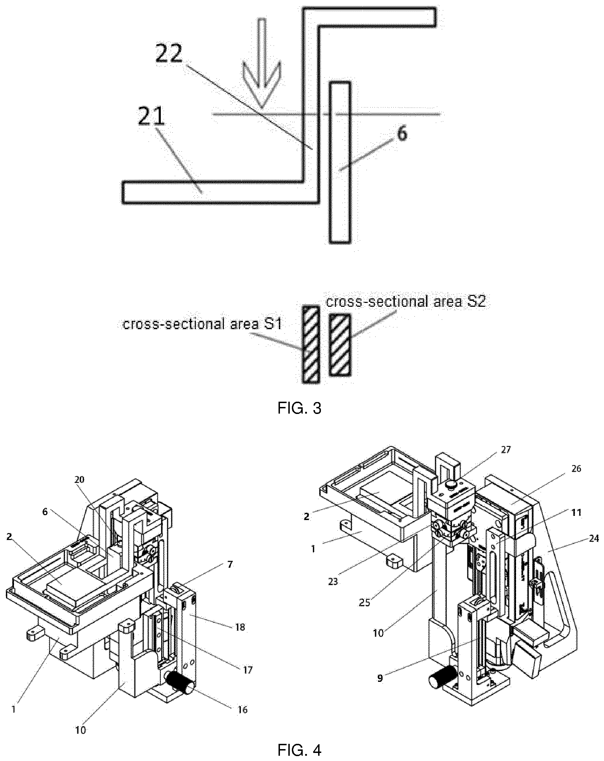

Preferably, the device for maintaining a constant liquid level in 3D printing in this embodiment, as shown in Figure 3, includes a printing platform 2 comprising a base plate 21 and a lifting segment 22 vertically fixed on one side of the base plate 21.

Both the lifting segment 22 and the liquid level balancing block 6 are cylindrical. With this configuration, it is easier to calculate the volume of one unit height of the lifting segment 22 and the liquid level balancing block 6, facilitating their coordination. As shown in Figure 3, the cross-sectional area of the lifting segment 22 is S₁, and the cross-sectional area of the liquid level balancing block 6 is S₂. The moving speed of one side of the timing belt 9 is v₁, and the moving speed of the other side is v₂. When S₁*v₁ =-S₂*v₂ is satisfied, the volume of the printing platform 2 descending into the printing liquid is equal to the volume of the liquid level balancing block 6 rising and leaving the printing liquid.

Preferably, the device for maintaining a constant liquid level in 3D printing in this embodiment, as shown in Figure 4, further includes a balancing block lifting guide 17, on which a slider is provided and connected to the balancing block connector 10. This ensures smooth and precise vertical movement of the liquid level balancing block 6.

Preferably, the device for maintaining a constant liquid level in 3D printing in this embodiment, as shown in Figure 4, at the connection between the slider and the balancing block connector 10, there is a balancer relaxation knob 16 to release the connection between the balancing block connector 10 and the timing belt 9. This configuration solves the problem of difficult removal of the printing platform 2 after it has descended to its lowest position while the liquid level balancing block 6 has risen to its highest position.

Preferably, the device for maintaining a constant liquid level in 3D printing in this embodiment, as shown in Figure 4, the balancing block connector 10 is connected to the liquid level balancing block 6 through a balancer assembly/disassembly knob 20. This structure allows the liquid level balancing block 6 to be detachable, so it can be installed or removed according to specific circumstances when installing the liquid tank 1, avoiding installation difficulties.

Preferably, the device for maintaining a constant liquid level in 3D printing in this embodiment, as shown in Figure 4, further includes a Z-axis support plate 24 for the printing platform Z-axis 26. The printing platform 2 is connected to the printing platform Z-axis 26 through the printing platform Z-axis support plate 24. The printing platform Rx leveling mechanism 25 and the printing platform Ry leveling mechanism 23 are fixe don the slider of the printing platform Z-axis 26. The printing platform Z-axis 26 is used to precisely control the position of the printing platform 2.

Preferably, the device for maintaining a constant liquid level in 3D printing in this embodiment, as shown in Figure 4, further includes a pulley support rod 18. The pulley support rod 18 is fixed relative to the printing platform Z-axis support plate 24 and is arranged with an upper fixed pulley 7 and a lower fixed pulley 8 (obscured in the figure). The timing belt 9 is then installed between the two pulleys.

Preferably, the device of this embodiment for maintaining a constant liquid level in 3D printing, as shown in Figure 4, also provides a detachable structure for fixing the printing platform 2 on the Z-axis 26 of the printing platform through the printing platform assembly/disassembly knob 27.

This embodiment provides a method for maintaining a constant liquid level in 3D printing, comprising the steps of:
- providing a liquid level balancing block 6, which extends into the liquid tank 1;
- providing a linkage mechanism that connects the printing platform 2 and the liquid level balancing block 6, capable of raising the liquid level balancing block 6 when the printing platform 2 descends; and the volume of the printing platform 2 corresponds to the volume of the liquid level balancing block 6, satisfying the condition that the volume of the printing liquid immersed by the printing platform 2 descending is equal to the volume of the liquid level balancing block 6 leaving the printing liquid.

Based on the exemplary embodiment described above, those skilled in the art can make various changes and modifications without departing from the scope of the present disclosure. The technical scope of the present disclosure is not limited to the contents of the specification and must be determined based on the scope of the claims.

## Claims

1. A device for maintaining a constant height of 3D printing liquid level, comprising:
- a liquid tank (1) for storing the printing liquid;
- a printing platform (2) for supporting the printed samples, wherein the printing platform (2) extends into the liquid tank (1) and can be raised and lowered by a printing lifting mechanism;
- a liquid level balancing block (6) extending into the liquid tank (1);
- a linkage mechanism connecting the printing platform (2) and the liquid level balancing block (6), capable of raising the liquid level balancing block (6) when the printing platform (2) descends; the volume of the printing platform (2) corresponds to the volume of the liquid level balancing block (6), satisfying that the volume of the printing platform (2) immersed in the printing liquid when it descends is equal to the volume of the liquid level balancing block (6) leaving the printing liquid when it rises.

2. The device according to claim 1, wherein the linkage mechanism comprises:
- a timing belt (9);
- timing belt mounting components;
- a balancing block connector (10);
- a printing platform connector (11);
the timing belt (9) is mounted on the timing belt mounting components; when one side of the timing belt (9) moves in a first direction, the other side moves in a second direction opposite to the first direction; one side of the timing belt (9) is connected to the liquid level balancing block (6) via the balancing block connector (10), and the other side of the timing belt (9) is connected to the printing platform (2) via the printing platform connector (11).

3. The device according to claim 2, wherein the timing belt mounting components comprise an upper fixed pulley (7) and a lower fixed pulley (8); the balancing block connector (10) and the printing platform connector (11) are both connecting rods.

4. The device according to claim 2, wherein the printing platform (2) comprises a base plate (21) and a lifting segment (22) vertically fixed on one side of the base plate (21);
the lifting segment (22) and the liquid level balancing block (6) are both cylindrical.

5. The device according to claim 4, wherein the cross-sectional area of the lifting segment (22) is S₁, the cross-sectional area of the liquid level balancing block (6) is S₂, the moving speed of one side of the timing belt (9) is v₁, and the moving speed of the other side is v₂; wherein S₁*v₁ = -S₂*v₂.

6. The device according to any one of claims 2 to 5, further comprising a balancing block lifting guide (17) with a slider, wherein the slider is connected to the balancing block connector (10).

7. The device according to claim 6, wherein there is a balancer relaxation knob (16) at the connection between the slider and the balancing block connector (10), used to release the connection between the balancing block connector (10) and the timing belt (9).

8. The device according to claim 7, wherein the balancing block connector (10) is connected to the liquid level balancing block (6) via a balancer assembly/disassembly knob (20).

9. The device according to any one of claims 1-5, **characterized in that** it further comprises a printing platform Z-axis support plate (24) and a printing platform Z-axis (26), wherein the printing platform (2) is connected to the printing platform Z-axis (26) and the printing platform Z-axis support plate (24); a printing platform Rx leveling mechanism (25) and a printing platform Ry leveling mechanism (23) are fixed on a slider of the printing platform Z-axis (26), and the printing platform Z-axis (26) is used to accurately control the position of the printing platform (2).

10. A method for maintaining a constant height of 3D printing liquid level, **characterized by** comprising the steps of:
- providing a liquid level balancing block (6) inserted into the liquid tank (1);
- providing a linkage mechanism that connects the printing platform (2) and the liquid level balancing block (6), capable of raising the liquid level balancing block (6) when the printing platform (2) descends; and the volume of the printing platform (2) corresponds to the volume of the liquid level balancing block (6), satisfying that the volume of the printing liquid immersed due to the descent of the printing platform (2) is equal to the volume of the liquid level balancing block (6) leaving the printing liquid.
